# EUROPEAN PATENT SPECIFICATION

(11) **EP 1 413 113 B1**
(45) Date of publication and mention of the grant of the patent: **21.09.2005**
(21) Application number: 01919387.9
(22) Date of filing: 13.03.2001
(51) Int. Cl.: H04L 29/06, G06F 13/00

(54) **ROUTING OF PEER-TO-PEER MESSAGES IN A COMMUNICATION NETWORK**
ROUTEN VON PEER-TO-PEER-NACHRICHTEN IN EINEM KOMMUNIKATIONSNETZ
ACHEMINEMENT DE MESSAGES POSTE POSTE DANS UN RESEAU DE COMMUNICATION

(43) Date of publication of application: 28.04.2004
(73) Proprietor: TELEFONAKTIEBOLAGET LM ERICSSON (publ), 164 83 Stockholm (SE)
(72) Inventor: FROHM, Tomas, S-663 41 Hammarö (SE); SJÖQVIST-ERIKSSON, Birgitta, S-653 49 Karlstad (SE)
(74) Representative: Pfeifer, Torsten
(86) International application number: PCT/EP2001/002805
(87) International publication number: WO 2002/073927

(56) References cited:
- WO-A1-01/10075
- WO-A2-01/30042
- US-A- 5 721 818
- US-A- 6 058 425

## Description

### TECHNICAL FIELD OF THE INVENTION

The present invention relates to methods and arrangements for routing of messages in a communication network. The messages are routed to one instance among several instances of a protocol implementation in the communication network.

### DESCRIPTION OF RELATED ART

In data- and telecommunications network of today a wide variety of protocols are used by the network nodes to exchange information with each other. Examples of communication protocols are SS7, TCP/IP, SIP, H248 or BICC. Numerous problems that have to be solved exist in such networks, e.g. communication media bandwidth, node processing power, redundancy, hot upgrade of SW and HW, etc.

In the US patent US 6,058,425 an improvement in computer systems having multiple TCP/IP instances to allow access to server applications across the IP domains of multiple TCP/IP instances is disclosed.

In the US patent US 5,737,404 a distributed signaling system seven call handling system is disclosed. The US patent shows a distributed architecture that includes a method to provide a message transport protocol in a signaling system seven with redundancy. This is done by a routing table that contains a primary address for an active layer three processing module and a secondary address for a standby layer three processing module. When a message arrives, it will be duplicated and forwarded to both the active and the standby processing module. The message is then processed in the standby processing module in the same manner as in the active processing module.

The problem with the method according to the US patent is that it lacks support for scalability in layer 3 processing modules and higher protocol modules.

In the US patent US 5,680,437 an arrangement for scalability also in higher protocol layers is.disclosed. However, in the US patent 5,680,437, the lack of redundancy causes problems. Each protocol stack disclosed in the US patent is firmly attached to a specific physical link. Each stack handles only one link. This will cause problems in case of link failure. Another problem is that even load sharing will be difficult to achieve due to the hard connection to links presented in the US patents.

If a protocol implementation is executed by a single processing unit within a communication network node, the message throughput of the protocol implementation (and hence the node) has an upper bound related to the capacity of the processing unit. If it was possible to have several processing units operating in parallel within the node, where each processing unit executed a copy of the same protocol implementation, the message throughput of the node would be scalable to the desired level. Each such copy of a protocol implementation is herein referred to as "instance" of the protocol implementation (or just "instance"). Several instances of a layer protocol implementation may be identical and only separated by an instance-identification. Identical instances perform the same task. If it was possible to make the protocol implementation consist of many identical instances executing in parallel, the processing load could be shared between them. The redundancy would then increase, hot upgrade would be facilitated, and the whole solution would be scalable from several perspectives, without the limitations present in US patents. It is however hard to make such a protocol implementation since protocol of today lacks support or have unsuitable support for such an implementation.

When two entities (interconnected in some way) want to exchange information with each other, some kind of protocol must be used by the entities. A protocol may in general be described using the layered OSI reference model, where the protocol is broken down into layers of different levels of abstraction, each layer using a protocol to convey information to its peer layer in the remote protocol stack.

A protocol can be either connection oriented/state-full or connectionless/state-less. It is to be noted that a connection oriented protocol always is state-full while a connectionless protocol not necessarily always has to be state-less. A connectionless protocol can be state-full in the sense that it after conveying a message to next layer waits for a receipt from its peer before it removes all the state information related to the message. If layer N is state-full, an instance of layer N-1 needs to know which instance of layer N that processed the previous message in the same transaction and send the incoming message to that particular instance. If layer N-1 is a connection oriented protocol this is no problem, because each instance of layer N-1 can store this information in its connection state database. The problem is if layer N-1 is a connectionless protocol and layer N is a state-full protocol. Traditionally there has always been a single instance of layer N, so an instance of layer N-1 has not had to make any choice. If layer N consists of multiple identical instances, each instance of layer N-1 needs some kind of information to make this choice.

### SUMMARY OF THE INVENTION

The present invention solves the problem with load sharing between multiple instances in nodes in a communication network. Multiple instances enables parallel processing of messages sent between the nodes. To be able to perform an effective parallel processing, a relation between the peer-to-peer instances involved in the information exchange must be kept during the whole ongoing transaction.

The problem is solved by the invention by inserting information, i.e. adding information or by changing the interpretation of existing information, in the messages. The information identifies which pair of instances that are involved in the communication.

More in detail, the problem is solved by a method and an arrangement for routing of messages in a communication network. The messages are routed to one instance among several instances of a protocol implementation in the communication network. The messages are sent between a first instance in a first node and a second instance in a second node. The method comprises inserting data identifying the first instance in an originating identification field in a first message. A default value is inserted in the first message in a destination identification field. The first message is then sent from the first node to the second node. The default value is identified in the second node and the first message is dispatched to a second instance in the second node whereby the second instance is selected out of several destination instances in the second node.

Alternatively, data identifying the second instance in the second node is inserted already in the first node, in the destination identification field in the first message. The second instance is hereby selected in the first node out of several destination instances in the second node. The first message is then sent from the first node to the second node and the first message is routed to the second instance.

In yet another alternative, only one address field is used in the message sent between the nodes. In this alternative, the method comprises inserting of data identifying the first instance in the address field. The message is then sent from the first node to the second node. The second instance is located by finding the peer instance of the first instance. This can be done e.g. by using a mapping database.

When the two instances have been pointed out, the ongoing interchange between the nodes continue by using the originating and destination identification fields to find the right connected instance.

An arrangement according to the invention is a mechanism that performs routing and load sharing of incoming messages to the correct instance of the receiving node whereby the load sharing and routing is based on the new inserted information.

The object of the present invention is to make parallel processing possible by means of load sharing between multiple instances in nodes in a communication network.

An advantage with the invention is that the implementation is scalable as regards node resources like processing power, memory size, communication links etc.

Another advantage is that the node may be given extremely high communication performance and capacity.

Yet another advantage is that the availability and redundancy of the communication interfaces increases since more than one instance may handle traffic.

Yet another advantage is that hot upgrade of the protocol implementation is facilitated.

Yet another advantage is performance/capacity licensing is facilitated (pay as you grow).

### DESCRIPTION OF THE DRAWINGS

Figure 1 is a schematic illustration of protocol stacks in the first node and the second node, according to a first embodiment of the invention.
Figure 2 is a flow chart disclosing the most important steps of the method in the first embodiment of the invention.
Figure 3 is a schematic illustration of protocol stacks in the first node and the second node, according to a third embodiment of the invention.
Figure 4 is a block schematic illustration of a routing mechanism that routes messages to correct instances in the receiving node.

### DESCRIPTION OF PREFERRED EMBODIMENTS

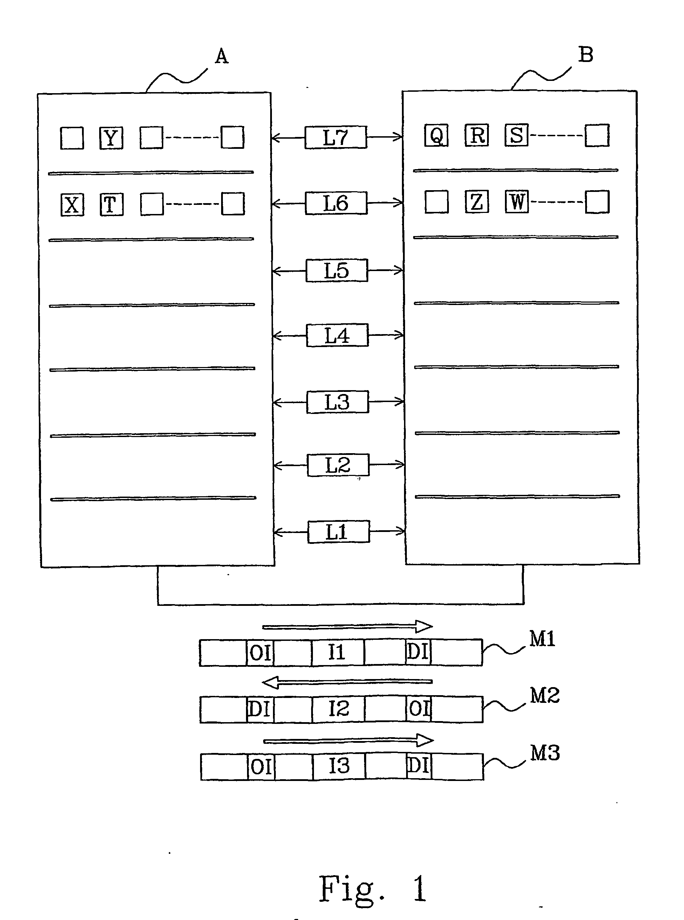

Figure 1 discloses two interconnected entities, i.e. two nodes A and B. When two nodes exchange information with each other, some kind of protocol must be used. A protocol may in general be described using the layered OSI reference model, where the protocol is broken down into layers of different levels of abstraction. Each layer is using a protocol to convey information to its peer layer in the remote protocol stack. The lower layers of a protocol are often standardized while the upper layers may be more or less proprietary. It is to be noted that the invention is not restricted to the OSI reference model, other reference models can also be used, e.g. the TCP/IP references model. In this description, the OSI model has been used as example. The OSI model consists of seven layers. Layer 1 L1 is called the physical layer specifying transfer of bits over the physical media. Layer 2 L2 is called the data link layer. This layer specifies frames and physical addresses. Layer 3 L3 is called the network layer. This layer specifies routing, logical addresses and fragmentation. Layer 4 L4 is called the transport layer. This layer specifies end-to-end protocol in a session. Layer 5 L5 is called the session layer. Layer 5 specifies session handling which involves control that the session layer is not terminated before all data is transferred and special messages for recovery of a crashed session. Layer 6 L6 is called the presentation layer. This layer specifies coding, i.e. transformation to common representation of data. Layer 7 L7 is called application layer. This layer specifies communication services, such as e-mail and file transfer.

In figure 1, the two nodes A and B are disclosed. Each node is represented by the above mentioned seven layers L1-L7. As indicated in the figure, each layer comprises instances Y, X, T, Q, R, S, Z and W. In figure 1, for the sake of clarity, only instances in layer L6 and L7 are shown. In node A, an instance is marked with a reference sign Y located in layer L7. In the same manner, two instances X and T can be seen in layer L6. In node B, instances Q, R, S can be seen in layer L7 and instances Z and W in layer L6. When two entities want to exchange information with each other, some kind of protocol must be used by the entities. Each layer in a protocol stack in a node is using a primitive to convey information to the next layer in the protocol stack, The next layer can be located under or above. For information to be transferred from a high layer entity in node A to the peer entity in node B, it first has to pass all layers in node A all the way down to the physical lowest layer, while the protocol is built up. A message implemented according to the protocol is thereafter transferred from node A to node B. The message according to the protocol then has to pass all layers in node B from the lowest layer to up to the peer layer where the peer destination instance is located. The nodes A and B use a wide variety of communication protocols to exchange information. An instance in a layer in an information-receiving node B hereby executes information received from a peer instance in the peer layer in the information-sending node A. In figure 1, peer-to-peer messages M1, M2 and M3 sent between the nodes A and B can be seen.

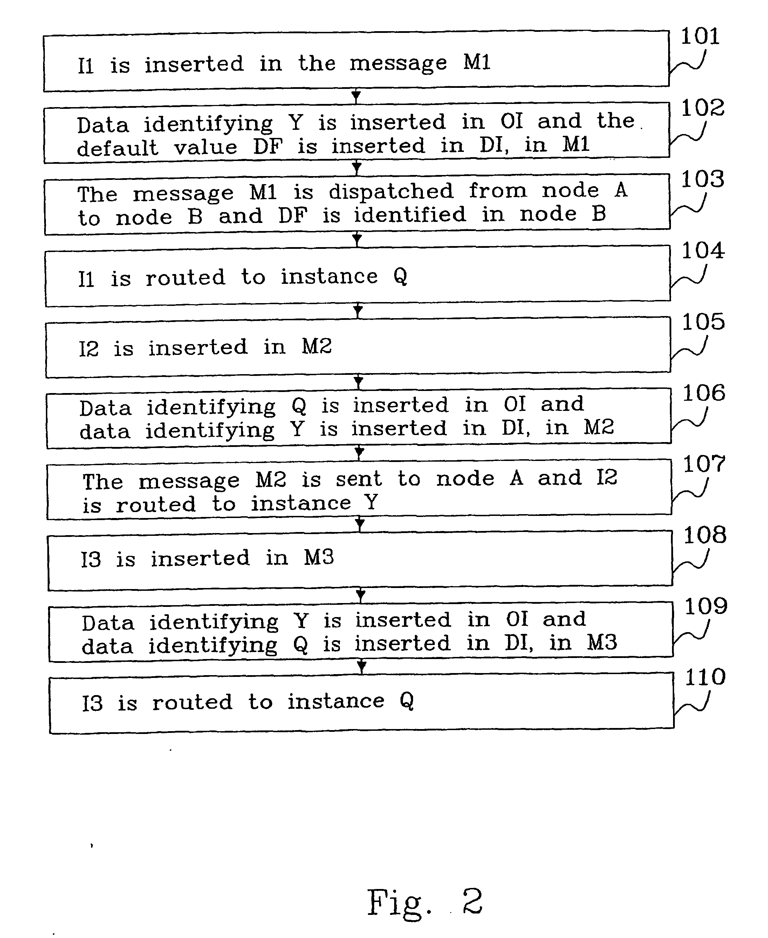

A method according to the invention will now be discussed. As already indicated, a problem arises if a layer N-1 is a state-less protocol while the layer N is a state-full protocol. An instance of layer N-1 needs to know which instance of layer N that processed the previous message in the same transaction and send the message to that particular instance. The method will be explained by using figure 1 as reference. Thereafter the most important steps of the method will be disclosed in a flow chart in figure 2. In short, the method discloses the implementation of originating identification fields and destination identification fields in the messages sent between the two nodes A and B. At first, a default value is used in the destination identification field to find a suitable destination instance. Thereafter when the two peer-to-peer instances have been found, these instances are kept during the whole communication session. The method in a first embodiment of the invention comprises the following steps:
- Information I1 from the first instance Y is inserted in a primitive in the top layer L7. The information is to be transferred from instance Y in the first node A to a peer instance in the second node B.
- Data is inserted in an originating identification field OI in the primitive in the top layer L7. The data identifies the first instance Y in layer L7 in node A.
- A default value DF is inserted in a destination identification field DI in the first peer-to-peer message. I1, Y and DF are inserted in the primitive in the top layer L7 and the primitive is then forwarded to underlying layer L6. For the sake of clarity, all data is from now on described as directly inserted in the peer-to-peer messages, i.e. the insertion in primitives has been left out.
- The first peer-to-peer message M1 is built up while passing all the layers from L7 to L1 in the protocol stack.
- The first peer-to-peer message M1 is sent from the first node A to the second node B.
- The message M1 passes layers L1-L5 in the protocol stack in node B to layer L6.
- The default value DF is identified in layer L6 in the second node B, i.e. the layer below the peer layer L7.
- Since a default value was identified, a second instance is selected out of several destination instances Q,R,S in the layer L7 in second node. The information I1 is routed to the second instance Q in the second node B.
- The information I1 is executed by the peer instance Q in the second node B.
- Information I2 is inserted in the second peer-to-peer message M2 by the second instance Q. The information is to be transferred from instance Q in the second node B to the peer instance Y in node A.
- Data identifying the second instance Q is inserted in the originating identification field OI in a second peer-to-peer message M2.
- Data identifying the first instance Y is inserted in the destination identification field DI in the second message M2.
- The second peer-to-peer message M2 is sent from the second node B to the first node A.
- The data identifying the first instance Y is located in the layer L6 below the peer layer L7 in node A.
- The information I2 is routed to the first instance Y.
- The information I2 is executed by the instance Y in the first node A.
- Information I3 is inserted in the third peer-to-peer message M3 by the first instance Y. The information is to be transferred from instance Y in the first node to the peer instance Q in node B.
- Data in the originating identification field OI identifying the first instance Y and data in the destination identification field DI identifying the second instance Q is inserted in the message M3.
- The message M3 is sent from the first node A to the second node B.
- The third message M3 is like earlier described routed to the second instance Q in node B.
- The information I3 is routed to and executed by the instance Q in the second node B.

To sum up, after selection of the peer instance Q, by using a default value, the two peer-to-peer instances Y and Q are kept as peer-to-peer instances during the whole ongoing information transaction.

In figure 2, the most essential steps of the method are disclosed in a flow chart. The flow chart is to be read together with figure 1. The most essential steps are as follows:
- The information I1 is inserted in the first peer-to-peer message M1. A block 101 illustrates the step.
- Data identifying Y is inserted in the originating identification field OI and the default value DF is inserted in the destination identification field DI in the first peer-to-peer message. A block 102 illustrates the step.
- The message is dispatched from node A to node B and the default value DF is identified in layer L6 in the second node B. A block 103 illustrates the step.
- The information I1 is routed to a second instance Q in the second node B. A block 104 illustrates the step.
- The Information I2 is inserted in the second peer-to-peer message M2 in the second node B. A block 105 illustrates the step.
- Data identifying the second instance Q is inserted in the originating identification field OI and data identifying the first instance Y is inserted in the destination identification field DI in the second message M2. A block 106 illustrates the step.
- The second peer-to-peer message M2 is sent to the first node A. A block 107 illustrates the step and the information I2 is routed to the first instance Y.
- The Information I3 is inserted in the third peer-to-peer message M3. A block 108 illustrates the step.
- Data in the originating identification field OI identifying the first instance Y and data in the destination identification field DI identifying the second instance Q are inserted in the message M3. A block 109 illustrates the step.
- The information I3 is routed to the instance Q in the node B. A block 110 illustrates the step.

A second embodiment will now briefly be explained. Like the first embodiment, the second embodiment is discussed together with figure 1. In the first embodiment a default value in the destination identification field in the peer-to-peer message M1 was sent to the second node B. Thereafter the second instance was pointed out in the second node. In the second embodiment an instance in the peer layer in the second node B is selected already in the first node A. This will lead to a method similar to the method according to the first embodiment. The method in the second embodiment of the invention however starts differently than the method according to the first embodiment. The method starts with the following steps:
- Information I1 is inserted in the first peer-to-peer message M1 by the first instance Y. The information is to be transferred from instance Y in the first node A to a peer instance in the second node B.
- Data is inserted in an originating identification field OI in the first peer-to-peer message M1. The data identifies the first instance Y in layer L7 in node A.
- Data identifying a second instance Q is selected, for example in a round robin manner and inserted in the destination identification field DI. The second instance Q is selected out of several destinations instances Q, R, S in the peer layer L7 in second node.
- The message M1 is built up while passing all the layers from L7 to L1 in the protocol stack.
- The first peer-to-peer message M1 is sent from the first node A to the second node B.
- The message M1 passes layers L1-L5 in the protocol stack in node B to layer L6.
- The information I1 is routed to the second instance Q in the second node B. In case the second instance was not found. For example if node B contained less nodes than was expected by node A, a mapping database can be used to find an instance suitable to select when instance Q (in this example) was specified by the first node.
- The information I1 is executed by the peer instance Q in the second node B.

Once the information has been routed to the second instance Q, the method continues in the same way as the method according to the first embodiment.

The signal format in the message used to attain routing of information between the peer-to-peer instances in the two nodes includes:
- The origination identification field OI in which the originating instance is specified, for example Y or Q.
- The destination identification field DI in which information pointing out a destination instance, for example Q or Y, is specified. This information can be either the destination instance itself or the default value DF later used to point out the destination instance.

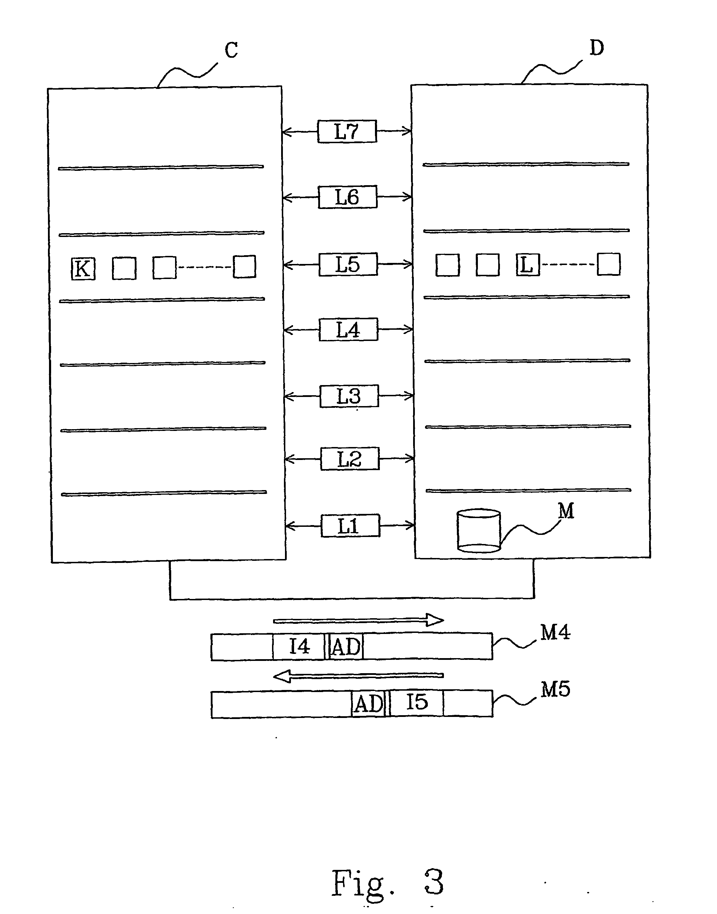

A third embodiment will now be explained together with figure 3. In figure 3, two nodes C and D are disclosed. Each node is represented by the earlier mentioned OSI layers L1-L7. In node C an instance is marked with a reference sign K located in layer L5. In the same manner, an instances L can be seen in layer L5 in node D. In figure 3, peer-to-peer messages M4 and M5 sent between the nodes A and B can be seen. The method in the third embodiment for routing the peer-to-peer messages M4, M5 between the first instance K in the first node C and the second instance L in the second node D comprises the following steps:
- Inserting information I4 in the first message M4, to be forwarded from the first instance K to the second node D.
- Inserting data identifying the first instance K, in an address field AD in the first message M4.
- Sending the first message M4 from the first node C to the second node D.
- Comparing in the second node D, the first instance K in the address field AD with a value in a mapping data bas M.
- Routing the information 14 in the first message M4 to the second instance L pointed out as destination instance in the mapping database M. If the number of instances in node A and B are the same or if the peer-instance in any other way is obvious, the information can be sent directly to the corresponding instance in B without using the mapping database M.
- Inserting information I5 in a second message M5, to be forwarded from the second instance L to the first node C.
- Inserting in the second message M5 in the originating address field AD, data identifying the first instance K.
- Sending the second message M5 from the second node D to the first node C.
- Routing the information I5 in the second message M5 to the first instance K.

In the step above, data identifying the first instance K was inserted actively in the message M5 by the second node D, in the address field AD. As an alternative the step can be as follows:
- Maintaining the first instance K in the address field AD in the second message M5.

The signal format in the message used to attain routing of information between the peer-to-peer instances in the two nodes includes:

The address field AD in which the originating instance is specified.

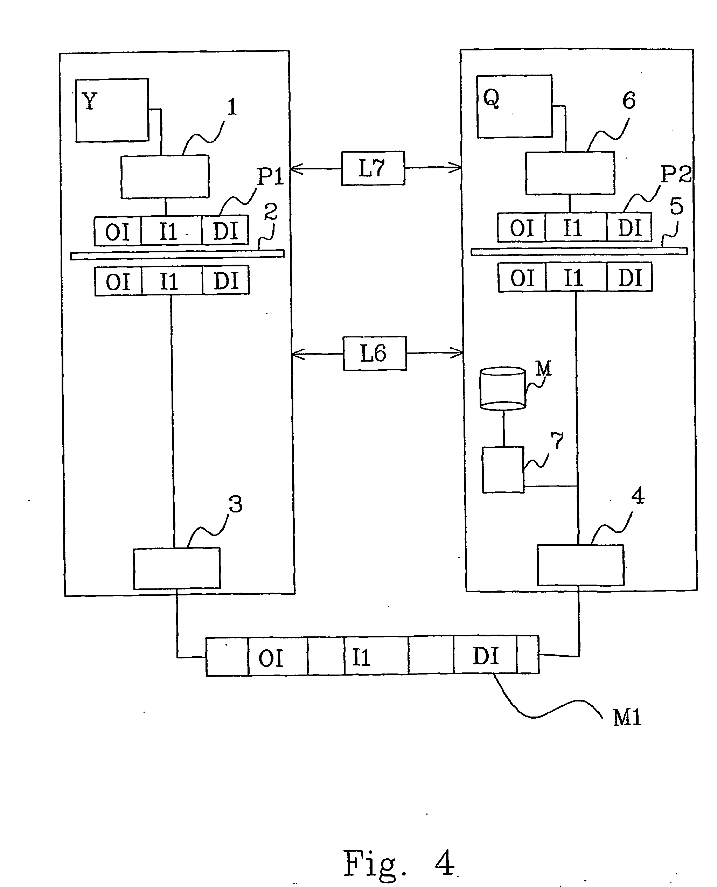

In figure 4, an arrangement according to the invention can be seen. The two nodes A and B are disclosed in figure 4. Node A comprises the earlier mentioned instance Y while node B comprises the instance Q. Routing means 1 is in this example used to insert information I1 into the primitive PI in the top layer L7 in node A. The routing means is also arranged to insert the data identifying the instance Y in the origination identification field OI. The destination instance Q (or a default value) is in the same way selected and inserted (or just inserted) in the destination identification field DI in the primitive by the routing means. Alternatively only one field is used as address field in the message. A conveyer means 2 is used to convey the primitive from layer L7 to the layer L6 below while the message M1 is built up. In this way primitives are transported downward in node A while the message M1 is build up. A transportation means 3 in node A is used to dispatch the message from node A to node B. In the same way the message M1 is disassembled in node B by the use of conveyer means 5 and information is routed to correct instance. When messages are sent from instance Q in node B to node A, routing means 6 and transportation means 4 are used in the same way as in node A. Identifying means 7 are used to identify incoming values in the destination identification field. A mapping database M is used to find suitable peer-to-peer instances in the two nodes.

Different variations are of course possible within the scope of the invention. For example, the selection of the destination instance is not limited to round robin. The destination instance can for example be randomly selected or selected in any other way. In the above examples instance identification have been inserted in the layer to which the instance belongs. It is however possible to make this insertion all the way down in the protocol stack until the message leaves the first node. The same applies when the message enters the second node i.e. the handling of instance identification can be done all the way up until information is delivered to the peer instance. In the embodiments, the method started in node A whereby the peer instance was found in node B. It is of course all the same and also possible to start in node B and find the peer instance in node A. In other words, the invention is not restricted to the above described and illustrated embodiments.

## Claims

1. A method for routing peer-to-peer messages (M1, M2, M3) in a communication network between a first instance (Y) in a first node (A) and a second instance (Q, R, S) in a second node (B), said method comprising the following steps:
- inserting information (I1) in a first message (M1), to be forwarded from the first instance (Y) to the second node (B);
- inserting data identifying the first instance (Y), in an originating identification field (OI) in the first message (M1); said method being **characterized by** the following steps:
- inserting a default value (DF) in a destination identification field (DI) in the first message;
- sending the first message (M1) from the first node (A) to the second node (B);
- identifying in the second node (B), the default value (DF);
- routing the information (I1) in the first message (M1) to a second instance (Q) in the second node (B), the second instance being selected out of several destination instances (Q,R,S) in the second node.

2. A method for routing peer-to-peer messages according to claim 1, wherein the default value represents data identifying a second instance (Q, R, S) in the second node (B).

3. A method for routing peer-to-peer messages (M1, M2, M3) in a communication network according to claim 1 or 2, said method comprising the following steps:
- inserting information (I2) in a second message (M2), to be forwarded from the second instance (Q) to the first node (A);
- inserting in the second message (M2) in the originating identification field (OI), data identifying the second instance (Q);
- inserting in the second message (M2) in the destination identification field (DI), data identifying the first instance (Y);
- sending the second message (M2) from the second node (B) to the first node (A);
- routing the information (I2) in the second message (M2) to the first instance (Y).

4. A method for routing peer-to-peer messages (M1, M2, M3) in a communication network according to claim 3, said method comprising the following steps:
- inserting information (I3) in a third message (M3), to be forwarded from the first instance (Y) to the second node (B);
- inserting in the third message (M3), data in the originating identification field (OI) identifying the first instance (Y) and data in the destination identification field (DI) identifying the second instance (Q);
- sending the third message (M3) from the first node (A) to the second node (B);
- routing the information (13) in the third message (M3) to the second instance (Q).

5. An arrangement for routing peer-to-peer messages (M1, M2, M3) in a communication network between a first instance (Y) in a first node (A) and a second instance (Q, R, S) in a second node (B), said arrangement comprises:
- means for inserting of information (I1) in a first message (M1), to be forwarded from the first instance (Y) to the second node (B);
- means for inserting data identifying the first instance (Y), in an originating identification field (OI) in the first message (M1); **characterized by**:
- means for inserting a default value (DF) in a destination identification field (DI) in the first message;
- means for sending the first message (M1) from the first node (A) to the second node (B);
- means for identifying in the second node (B), the default value (DF);
- means for routing the information (I1) in the first message (M1) to a second instance (Q) in the second node (B), the second instance being selected out of several destination instances (Q,R,S) in the second node.

## Patentansprüche

1. Verfahren zum Routen von Peer-to-Peer Nachrichten (M1, M2, M3) in einem Kommunikationsnetz zwischen einer ersten Instanz (Y) in einem ersten Knoten (A) und einer zweiten Instanz (Q, R, S) in einem zweiten Knoten (B), wobei das Verfahren die folgenden Schritte umfasst:
- Einfügen einer Information (I1; 14) in eine erste Nachricht (M1), die von der ersten Instanz (Y) an den zweiten Knoten (B) übermittelt werden soll;
- Einfügen von Daten, die die erste Instanz (Y) identifizieren, in ein Absenderidentifikationsfeld (OI) in der ersten Nachricht (M1); wobei das Verfahren durch die folgenden Schritte **gekennzeichnet** ist:
- Einfügen eines Ausgangswertes (DF) in ein Zielidentifikationsfeld (DI) in der ersten Nachricht;
- Senden der ersten Nachricht (M1) von dem ersten Knoten (A) an den zweiten Knoten (B);
- Identifizieren des Ausgangswertes (DF) im zweiten Knoten (B);
- Routen der Information (I1) in der ersten Nachricht (M1) an eine zweite Instanz (Q) im zweiten Knoten (B), wobei die zweite Instanz aus mehreren Zielinstanzen (Q, R, S) im zweiten Knoten ausgewählt wird.

2. Verfahren zum Routen von Peer-to-Peer Nachrichten gemäß Anspruch 1, wobei der Ausgangswert Daten zum Identifizieren einer zweiten Instanz (Q, R, S) in dem zweiten Knoten (B) darstellt.

3. Verfahren zum Routen von Peer-to-Peer Nachrichten (M1, M2, M3) in einem Kommunikationsnetz gemäß Anspruch 1 oder 2, wobei das Verfahren die folgenden Schritte umfasst:
- Einfügen einer Information (12) in eine zweite Nachricht (M2), die von der zweiten Instanz (Q) an den ersten Knoten (A) übermittelt werden soll;
- Einfügen von Daten, die die zweite Instanz (Q) identifizieren, in das Absenderidentifikationsfeld (OI) in der zweiten Nachricht (M2);
- Einfügen von Daten, die die erste Instanz (Y) identifizieren, in das Zielidentifikationsfeld (DI) in der zweiten Nachricht (M2);
- Senden der zweiten Nachricht (M2) von dem zweiten Knoten (B) an den ersten Knoten (A);
- Routen der Information (12) in der zweiten Nachricht (M2) an die erste Instanz (Y).

4. Verfahren zum Routen von Peer-to-Peer Nachrichten (M1, M2, M3) in einem Kommunikationsnetz gemäß Anspruch 3, wobei das Verfahren die folgenden Schritte umfasst:
- Einfügen einer Information (13) in eine dritte Nachricht (M3), die von der ersten Instanz (Y) an den zweiten Knoten (B) übermittelt werden soll;
- Einfügen in die dritte Nachricht (M3) von Daten, die die erste Instanz (Y) identifizieren, in das Absenderidentifikationsfeld (OI) sowie von Daten, die die zweite Instanz (Q) identifizieren, in das Zielidentifikationsfeld (DI);
- Senden der dritten Nachricht (M3) von dem ersten Knoten (A) an den ersten zweiten Knoten (B);
- Routen der Information (13) in der dritten Nachricht (M3) an die zweite Instanz (Q).

5. Anordnung zum Routen von Peer-to-Peer Nachrichten (M1, M2, M3) in einem Kommunikationsnetz zwischen einer ersten Instanz (Y) in einem ersten Knoten (A) und einer zweiten Instanz (Q, R, S) in einem zweiten Knoten (B), wobei die Anordnung umfasst:
- Mittel zum Einfügen einer Information (I1) in eine erste Nachricht (M1), die von der ersten Instanz (Y) an den zweiten Knoten (B) übermittelt werden soll;
- Mittel zum Einfügen von Daten, die die erste Instanz (Y) identifizieren, in ein Absenderidentifikationsfeld (OI) in der ersten Nachricht (M1); **gekennzeichnet durch**:
- Mittel zum Einfügen eines Ausgangswertes (DF) in ein Zielidentifikationsfeld (DI) in der ersten Nachricht;
- Mittel zum Senden der ersten Nachricht (M1) von dem ersten Knoten (A) an den zweiten Knoten (B);
- Mittel zum Identifizieren des Ausgangswertes (DF) im zweiten Knoten (B);
- Mittel zum Routen der Information (I1) in der ersten Nachricht (M1) an eine zweite Instanz (Q) im zweiten Knoten (B), wobei die zweite Instanz aus mehreren Zielinstanzen (Q, R, S) im zweiten Knoten ausgewählt wird.

## Revendications

1. Procédé de routage de messages pair-à-pair (Peer-to-Peer) (M1, M2, M3) dans un réseau de communication entre une première instance (Y) dans un premier noeud (A) et une seconde instance (Q, R, S) dans un second noeud (B), ledit procédé comprenant les étapes suivantes :
- insérer des informations (I1) dans un premier message (M1), qui doit être acheminé de la première instance (Y) vers le second noeud (B) ;
- insérer des données identifiant la première instance (Y), dans un champ d'identification d'origine (OI) dans le premier message (M1) ; ledit procédé étant **caractérisé par** les étapes suivantes :
- insérer une valeur par défaut (DF) dans un champ d'identification de destination (DI) dans le premier message ;
- envoyer le premier message (M1) du premier noeud (A) au second noeud (B) ;
- identifier dans le second noeud (B) la valeur par défaut (DF) ;
- router l'information (I1) dans le premier message (M1) vers une seconde instance (Q) dans le second noeud (B), la seconde instance étant sélectionnée parmi plusieurs instances de destination (Q, R, S) dans le second noeud.

2. Procédé de routage de messages pair-à-pair selon la revendication 1, dans lequel la valeur par défaut représente des données identifiant une seconde instance (Q, R, S) dans le second noeud (B).

3. Procédé de routage de messages pair-à-pair (M1, M2, M3) dans un réseau de communication selon la revendication 1 ou 2, ledit procédé comprenant les étapes suivantes :
- insérer des informations (I2) dans un second message (M2) qui doit être acheminé de la seconde instance (Q) vers le premier noeud (A) ;
- insérer dans le second message (M2) dans le champ d'identification d'origine (OI) des données identifiant la seconde instance (Q) ;
- insérer dans le second message (M2) dans le champ d'identification de destination (DI) des données identifiant la première instance (Y) ;
- envoyer le second message (M2) du second noeud (B) vers le premier noeud (A) ;
- router les informations (I2) dans le second message (M2) vers la première instance (Y).

4. Procédé de routage de messages pair-à-pair (M1, M2, M3) dans un réseau de communication selon la revendication 3, ledit procédé comprenant les étapes suivantes :
- insérer une information (I3) dans un troisième message (M3), qui doit être acheminé de la première instance (Y) vers le second noeud (B) ;
- insérer dans le troisième message (M3) des données dans le champ d'identification d'origine (OI) identifiant la première instance (Y) et des données dans le champ d'identification de destination (DI) identifiant la seconde instance (Q) ;
- envoyer le troisième message (M3) du premier noeud (A) vers le second noeud (B) ;
- router l'information (I3) dans le troisième message (M3) vers la seconde instance (Q).

5. Dispositif de routage de messages pair-à-pair (Peer-to-Peer) (M1, M2, M3) dans un réseau de communication entre une première instance (Y) dans un premier noeud (A) et une seconde instance (Q, R, S) dans un second noeud (B), ledit dispositif comprenant :
- un moyen pour insérer une information (I1) dans un premier message (M1) qui doit être acheminé de la première instance (Y) vers le second noeud (B) ;
- un moyen pour insérer des données identifiant la première instance (Y) dans un champ d'identification d'origine (OI) dans le premier message (M1) ; **caractérisé par** :
- un moyen pour insérer une valeur par défaut (DF) dans un champ d'identification de destination (DI) dans le premier message ;
- un moyen pour envoyer le premier message (M1) du premier noeud (A) vers le second noeud (B) ;
- un moyen pour identifier dans le second noeud (B) la valeur par défaut (DF) ;
- un moyen pour router l'information (I1) dans le premier message (M1) vers une seconde instance (Q) dans le second noeud (B), la seconde instance étant sélectionnée parmi plusieurs instances de destination (Q, R, S) dans le second noeud.
